# EUROPEAN PATENT SPECIFICATION

(11) **EP 4 042 863 B1**
(45) Date of publication and mention of the grant of the patent: **11.02.2026**
(21) Application number: 21160956.5
(22) Date of filing: 05.03.2021
(51) Int. Cl.: A01J 27/00, A01J 27/04

(54) **A DEVICE AND METHOD FOR CARVING THE RIND OF HARD CHEESES**
VORRICHTUNG UND VERFAHREN ZUM SCHNEIDEN DER RINDE VON HARTKÄSE
UN DISPOSITIF ET UNE MÉTHODE POUR TAILLER LA CROÛTE DES FROMAGES À PÂTE DURE

(30) Priority: 15.02.2021 IT 202100003329
(43) Date of publication of application: 17.08.2022
(73) Proprietor: Faber S.r.l., 24045 Fara Gera d'Adda (BG) (IT)
(72) Inventor: AGAZZI, Flavio Omar Enrico, 24045 Fara Gera d'Adda (BG) (IT)
(74) Representative: Chimini, Francesco

(56) References cited:
- EP-A1- 0 685 154
- FR-A1- 3 027 485

## Description

The present invention relates to the field of machines for processing cheese and relates, in particular, to a device and a method for carving the rind of hard cheeses.

As known, the operation of carving the rind of hard cheeses is currently performed using a circular milling cutter rotating at a predetermined speed. In some embodiments, the device supporting the milling machine is kept still and the wheel rotates about the axis thereof in the opposite direction to the milling machine. Examples of known carving methods are disclosed in FR3027485 A1 and in EP0685154 A1.

These machines have the disadvantage of generating considerable product waste. Furthermore, milling machines are not suitable for contact with foodstuffs due to the material used for the construction thereof. Furthermore, a possible caking of the product on the milling cutter can occur, compromising the efficiency of the machine.

In the case of the presence, on the wheel, of manual removals made to eliminate surface imperfections, the milling cutter risks being damaged with the further drawback of metal fragments sticking in the product.

It is the object of the present invention to propose a device for carving the rind of a cheese wheel capable of overcoming the drawbacks of the current machines.

Such object is achieved with a device according to claim 1 and with a carving method according to claim 11. The dependent claims describe preferred or advantageous embodiments of the device and carving method according to the invention.

The features and advantages of the device and carving method according to the invention will become apparent in any case from the following description of preferred embodiments thereof, given by way of nonlimiting, indicative example, with reference to the accompanying figures, wherein:

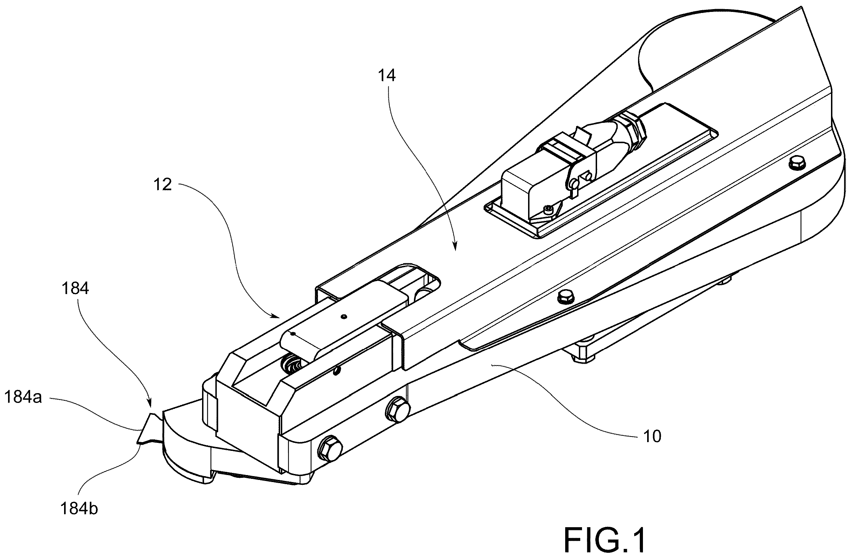

- Figure 1 is a perspective view of the carving device according to the invention;

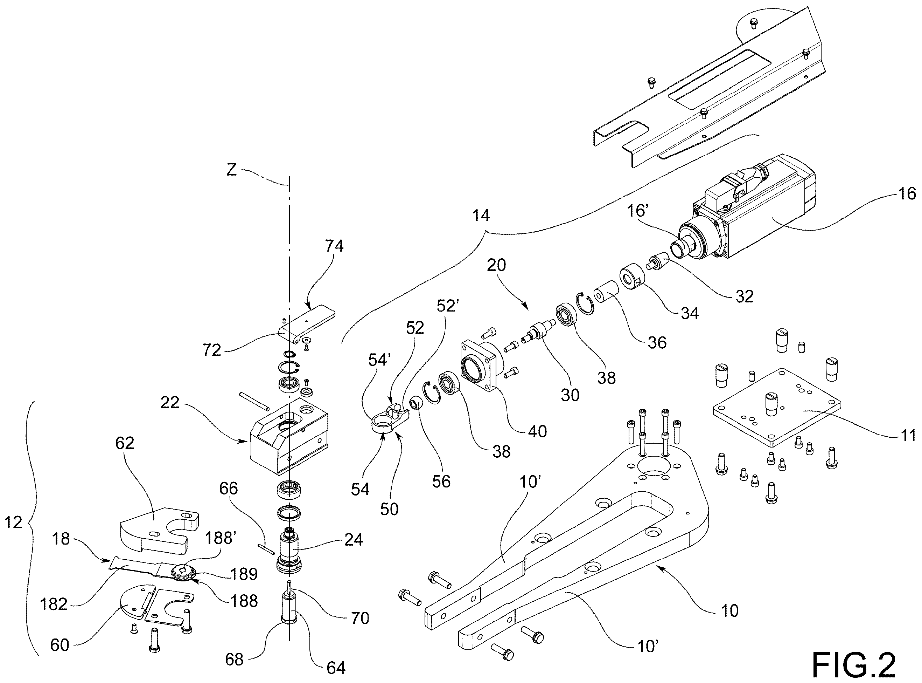

- Figure 2 is an exploded perspective view of the carving device;

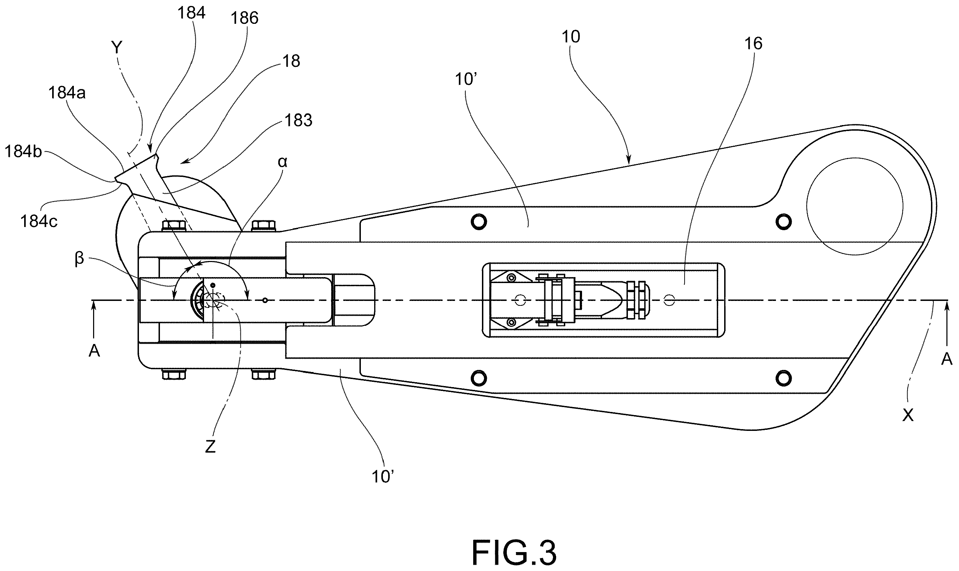

- Figure 3 is a plan view from above of the carving device;

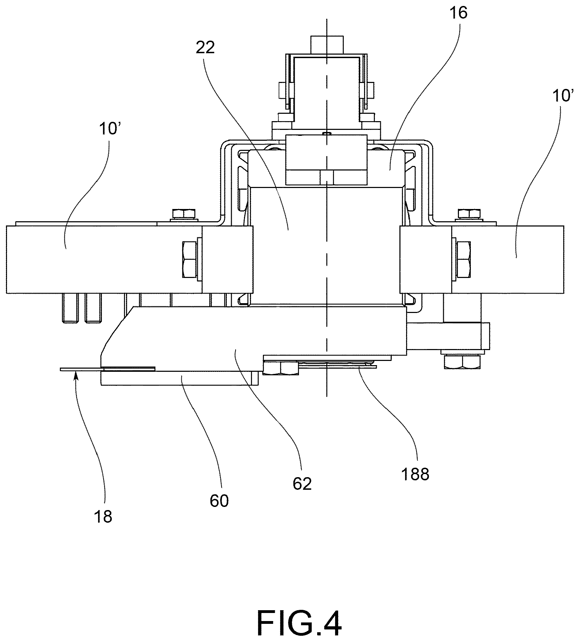

- figure 4 is an end view of the carving device;
- figure 5 is a longitudinal section of the device along the section line A-A of figure 3; and

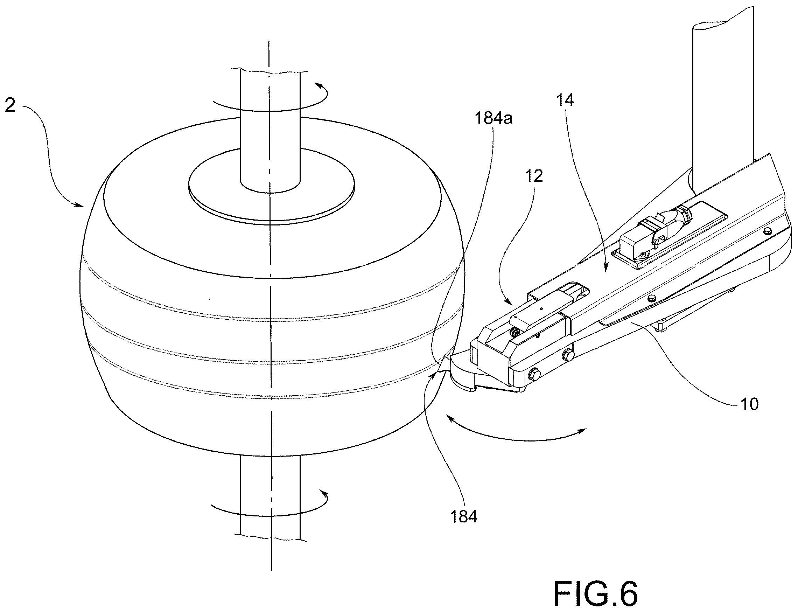

- figure 6 shows the device during the carving of the rind of a cheese wheel.

In said drawings, a carving device for carving the rind of a cheese wheel 2 with a hard rind according to the invention, is globally denoted with reference numeral 1.

In a general embodiment, the device 1 comprises a support body 10, a carving head 12 and an actuation group 14.

The support body 10 extends mainly along a longitudinal body axis X. The support body 10 can have, for example, a plate-like structure and be "U" shaped, i.e. defining two substantially parallel support arms 10' so that at least one part of the components secured thereto are at least partially housed in the thickness of the structure.

The carving head 12 is mounted on a distal end of the support body. For example, the carving head 12 is arranged between the distal ends of the support arms 10'.

The actuation group 14 comprises an electric motor 16, for example, an electrospindle, with a drive shaft 16' oriented parallel to the longitudinal body axis X.

For example, the electric motor can be secured to the support body 10 by means of a motor support plate 11.

The carving head 12 comprises a carving blade 18 extending mainly on a blade plane and along a blade axis Y, which is inclined with respect to the longitudinal body axis X.

The actuation group 14 comprises movement conversion means 20 cooperating with the carving head 12 and configured to convert the rotatory movement of the drive shaft 16' into an oscillatory movement of the carving blade 18 in the blade plane.

An oscillatory movement of the carving blade means an oscillation at a high frequency, in the order of tens of thousands of oscillations per minute, and of a limited amount, in the order of a few degrees, for example, about 4°. In other words, the oscillatory movement can be considered a vibration of the carving blade.

For example, the electric motor 16 is suitable to rotate the drive shaft at a speed greater than 10,000 revs/min, for example, at 30,000 revs/min.

In an embodiment, the carving blade 18 is made to oscillate at the same frequency as the drive shaft 16'. In other words, the movement conversion means do not introduce gearing down or damping effects into the kinematic system connecting the motor to the carving blade.

The shape of the carving blade 18 in some embodiments will now be described in further detail.

In an embodiment, the carving blade 18 has an elongated blade body 182. The blade body 182 has an intermediate elongated portion 183, for example, which is rectangular shaped, extending mainly along the blade axis Y. The blade body 182 terminates with a distal carving portion 184. This distal carving portion 184 forms a terminal carving edge 184a extending transversely to the blade axis Y and which, when the carving blade 18 is placed in oscillation, is suitable to create a carving in the cheese rind. The depth of the carving can be adjusted as a function of the extension of the terminal carving edge 184a and/or of the width of the oscillation angle.

In the embodiment shown in the drawings, the terminal carving edge 184a extends along a rectilinear direction. Furthermore, in this described embodiment, the terminal carving edge 184a is orthogonal to the blade axis Y.

It should be noted that the terminal carving edge 184a does not necessarily need to be with a sharp edge, the effect of penetrating the rind being given at least mainly by the vibration at a high-frequency of the carving blade 18.

In some embodiments, the terminal carving edge 184 can be provided with a serration or indentation, for example, with shark teeth.

In an illustrated embodiment, the distal portion 184 extends transversely beyond the profile of the intermediate portion 183, at least in the semi-plane of the blade plane the angle α of which between the blade axis Y and the longitudinal body axis Y is less than 180°.

In other words, the distal portion 184 of the blade body 182 forms a tooth or incision point 186 extending transversely to the blade axis Y so that at least the initial incision in the rind of the cheese occurs without interference between the intermediate portion 183 and the rind.

In an embodiment, the distal carving portion 184 is delimited by the terminal carving edge 184a, two parallel edges 184b, orthogonal to the terminal carving edge 184a and two inclined edges 184c joining the parallel edges 184b to the intermediate portion 183 of the blade body 182. The two inclined edges 184c diverge from the intermediate portion 183 of the blade body.

In an embodiment, the blade axis Y forms, with the extension in a distal direction of the longitudinal body axis X, a blade angle β from 50° to 70°.

In an embodiment, the carving head 12 comprises a head body 22 secured to the support body 10, for example, between the two support arms 10'.

A blade pin 24, rotatable about a pin axis Z orthogonal to the blade plane, is housed in the head body 22. Considering the blade plane oriented horizontally, i.e. parallel to the flat faces of a cheese wheel resting on a support with the lower flat face thereof, the pin axis Z thus extends vertically. The carving blade 18 is integral on rotation with the blade pin 24. In turn, the blade pin 24 is moved on rotation by the movement conversion means 20.

In an embodiment, the movement conversion means 20 comprise a cam shaft 30, i.e. an eccentric shaft, operatively connected to the drive motor 16'. For example, the camshaft 30 is connected to the drive shaft 16' by means of a conical pin 32, a motor ring 34 and a motor coupling 36. The cam shaft 30 is supported by ball bearings 38, housed in a bearing support flange 40.

The movement conversion means 20 further comprise an oscillating lever 50 controlled by the camshaft 30.

In particular, the oscillating lever 50 has a shaft connection portion 52 engaged by the cam of the camshaft 30, so that the rotation of the camshaft 30 causes an oscillation of the oscillating lever 50. The oscillating lever 50 further has a blade connection portion 54 operatively connected to the carving blade 18.

In an embodiment, the blade connection portion 54 comprises an annular portion 54' into which the blade pin 24 is inserted with shape and/or force coupling. Therefore, the oscillation of the oscillating lever 50 causes a rotation of the annular portion 54 and then of the blade pin 24, and consequently, an oscillation of the carving blade 18.

In an embodiment, the annular portion 54' is housed with shape coupling in the head body 22 so that the oscillating lever 50 oscillates about the rotation axis of the annular portion 54' (which coincides with the pin axis Z).

In an embodiment, the movement conversion means 20 further comprise an oscillation ball 56 defining an inner cavity 56'. This inner cavity 56' is engaged by the cam of the camshaft 30. The shaft connection portion 52 of the oscillating lever 50 comprises a concave portion 52' geometrically coupled to the oscillation ball 56 so that the rotation of the camshaft 30 causes an oscillation of the oscillating ball 56 and therefore of the oscillation lever 50.

Now, back to the carving blade 18, in an embodiment the blade is guided in the oscillation movement thereof between a lower guide plate 60 and an upper guide plate 62. For example, these guide plates 60, 62 are secured to a lower face of the head body 22, for example, by means of screws.

In an embodiment, the blade pin 24 is crossed by an axial cavity 24'. In other words, the blade pin 24 is a hollow pin. The carving head 12 comprises a blade coupling pin 64 crossing the axial cavity 24' of the blade pin 24. In other words, the blade pin 24 coaxially overlaps the blade coupling pin 64. The latter is integral on rotation with the blade pin 24. For example, the two pins 24, 64 are made integral by a radial pin 66. The blade coupling pin 64 has a coupling base 68 to which a proximal portion 188 of the carving blade 18 is removably coupled. Therefore, the coupling base 68 remains outside the axial cavity 24' of the blade pin 24 to support the carving blade 18. For example, the coupling base 68 is provided with coupling teeth 68', which snap engage corresponding teeth openings 188' obtained in the proximal portion 188 of the carving blade 18.

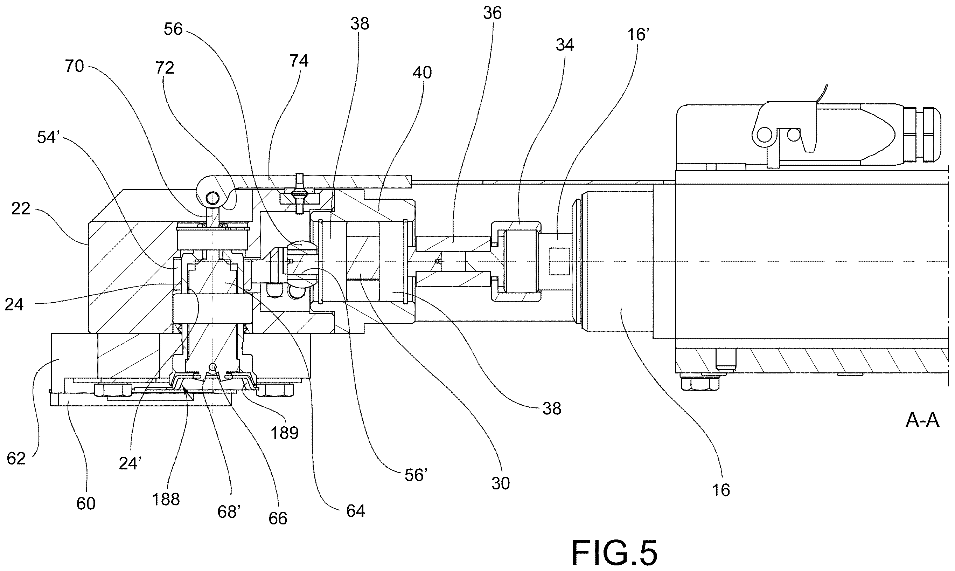

In an embodiment, for the removal of the carving blade 18 from the blade coupling pin 64, for example, in the event of a replacement, the blade coupling pin 64 is provided with a tooth recall mechanism - not shown - manually operable for moving the coupling teeth 68' from an open blade coupling position (shown, for example, in figure 5) to a closed blade release position.

For example, the tooth recall mechanism comprises a control stem 70 projecting from the blade pin 24, at the opposite end to the coupling base 68 and which is operable by a cam portion 72 of a release lever 74 hinged to the head body 22.

The release lever 74 is rotatable between an inactive position, in which the cam portion 72 does not affect the control stem 70, and an active unlocking position, in which the cam portion actuates the control stem 70, which acts on the tooth recall mechanism.

In an embodiment shown in the drawings, the proximal portion 188 is provided with an annular knurled ridge 189, which cooperates with a corresponding inner surface of the blade pin 24 and/or of the blade coupling pin 68 so as to prevent any undesired sliding of the carving blade 18 with respect to the two pins 24, 64.

In an embodiment, the support body 10 is hinged to a column of a carving machine - not shown - so as to rotate between an inactive position, distant from the cheese wheel to be carved, and an active position in contact with the wheel.

Therefore, in order to carve the rind of a cheese wheel 2, the carving device 1 described above is moved close to the wheel so that the blade axis Y is inclined with respect to the tangent to the side surface of the cheese wheel at the point of contact with the carving blade 18. For example, in this working position, the longitudinal body axis X is substantially parallel to the tangent to the cheese wheel at the point of contact with the carving blade 18.

When the device is in the working position, the cheese wheel 2 is rotated about an axis thereof and the motor group is actuated, causing the oscillation of the carving blade 18.

When the carving blade has carved a complete circumference of the wheel, the device is rotated, or translated, into an inactive position, to allow another cutting device, for example, which is level, to make a complete section of the wheel passing through the newly made incision.

A method for carving the rind of a cheese wheel with a hard rind including the use of a carving blade oscillating at a high frequency in a blade plane parallel to the flat faces of the wheel is also the subject of the present invention.

High-frequency oscillation means an oscillation having a frequency in the order of tens of thousands of oscillations per minute, whereby the oscillation of the carving blade is comparable to a vibration.

According to the invention, the carving blade oscillates about an oscillation axis perpendicular to the blade plane.

According to the invention the carving blade has a terminal carving edge, which, when the carving blade is brought close to the wheel, extends substantially along an inclined direction with respect to the tangent to the circumference of the wheel at the point of contact with the carving blade.

With respect to a milling cutter with a rotating blade, the carving blade, by virtue of the oscillatory movement thereof, generates much less waste.

With respect to a rotating blade, the oscillating carving blade 18 is less subject to breakage and therefore can be made with a smaller thickness, for example, less than 1 mm.

Furthermore, the oscillating blade is less subject to sticking.

The oscillating blade heats up less than a rotating blade and therefore does not alter the organoleptic characteristics of the product.

In the event of the oscillating blade breaking, the risk of creating a hazard to people or objects is considerably less than with the rotating blade.

A person skilled in the art may make changes and adaptations to the embodiments of the carving method and device and replace elements with others, which are functionally equivalent, in order to satisfy contingent needs, without departing from the scope of the following claims.

## Claims

1. A device for carving the rind of hard cheeses, comprising:
- a support body (10) extending mainly along a longitudinal body axis (X);
- a carving head (12) mounted onto a distal end of the support body (10), wherein the carving head (12) comprises a carving blade (18) extending mainly on a blade plane and along a blade axis (Y),
**characterized in that** the device comprises -an actuation group (14) comprising an electric motor (16) with a drive shaft (16') oriented parallel to the longitudinal body axis (X),
**in that** the blade axis (Y) is inclined with respect to the longitudinal body axis (X),
and **in that** the actuation group comprises movement conversion means (20) cooperating with the carving head and configured to convert the rotatory movement of the drive shaft into an oscillatory movement of the carving blade in the blade plane.

2. A device according to claim 1, wherein the electric motor (16) is suitable to rotate the drive shaft at a speed of at least 10,000 rpm.

3. A device according to claim 1 or 2, wherein the carving blade (18) is made to oscillate at the same frequency as the drive shaft (16').

4. A device according to any one of the preceding claims, wherein the carving blade (18) has a blade body (182) comprising an intermediate portion (183) with an elongated shape and a distal carving portion (184), wherein the distal carving portion (184) forms a terminal carving edge (184a) extending transversely to the blade axis (Y).

5. A device according to claim 4, wherein the terminal carving edge (184a) extends along a rectilinear direction.

6. A device according to the preceding claim, wherein the distal carving portion (184) is delimited by a terminal carving edge (184a) orthogonal to the blade axis, two parallel edges (184b) orthogonal to the terminal edge and two inclined edges (184c) joining the parallel edges to the intermediate portion (183), the two inclined edges being divergent from the intermediate portion (183).

7. A device according to any one of the preceding claims, wherein the blade axis forms, with the extension in a distal direction of the longitudinal body axis, a blade angle (β) from 50° to 70°.

8. A device according to any one of the preceding claims, wherein the carving head comprises a head body (22) secured to the support body, a blade pin (24) being housed in the head body, rotatable about a pin axis (Z) orthogonal to the blade plane, the carving blade being integral in rotation with the blade pin, the blade pin being moved in rotation by the movement conversion means (20).

9. A device according to any one of the preceding claims, wherein the movement conversion means comprise a camshaft (30) operatively connected to the drive shaft and an oscillating lever (50) having a shaft connection portion (52) engaged by the cam of the camshaft, so that the rotation of the camshaft causes an oscillation of the oscillating lever, and a blade connection portion (54) operatively connected to the carving blade.

10. A device according to claim 9, wherein the movement conversion means comprise an oscillation ball (56) defining an inner cavity (56'), the inner cavity being engaged by the cam of the camshaft (30), and wherein the shaft connection portion comprises a concave portion (52') geometrically coupled to the oscillation ball (56) so that the rotation of the camshaft causes an oscillation of the oscillating ball and therefore of the oscillation lever.

11. A method for carving the rind of a hard rind cheese wheel (2) comprising a side surface and opposite flat faces, said method comprising the use of a carving blade (18) oscillating at a high frequency in a blade plane parallel to the flat faces of the cheese wheel, wherein the carving blade oscillates about an oscillation axis perpendicular to the blade plane and wherein the carving blade has a terminal carving edge (184a), which, when the carving blade is brought close to the cheese wheel, extends substantially along an inclined direction with respect to the tangent to the side surface of the wheel at the point of contact with the carving blade.

## Patentansprüche

1. Vorrichtung zum Schneiden der Rinde von Hartkäse, umfassend:
- einen Stützkörper (10), der sich hauptsächlich entlang einer Längskörperachse (X) erstreckt;
- einen Schneidkopf (12), der an einem distalen Ende des Stützkörpers (10) eingebaut wird, wobei der Schneidkopf (12) eine Schneidklinge (18) umfasst, die sich hauptsächlich in einer Klingenebene und entlang einer Klingenachse (Y) erstreckt,
**dadurch gekennzeichnet, dass** die Vorrichtung umfasst
- eine Betätigungsgruppe (14) umfassend einen Elektromotor (16) mit einer Antriebswelle (16'), die parallel zur Längskörperachse (X) ausgerichtet ist,
dass die Klingenachse (Y) in Bezug auf die Längskörperachse (X) geneigt ist,
und dass
die Betätigungsgruppe Bewegungsumwandlungsmittel (20) umfasst, die mit dem Schneidkopf zusammenwirken und dazu konfiguriert sind, die Drehbewegung der Antriebswelle in eine Schwingbewegung der Schneidklinge in der Klingenebene umzuwandeln.

2. Vorrichtung nach Anspruch 1, wobei der Elektromotor (16) geeignet ist, die Antriebswelle mit einer Geschwindigkeit von mindestens 10.000 U/min zu drehen.

3. Vorrichtung nach Anspruch 1 oder 2, wobei die Schneidklinge (18) ausgebildet ist, um mit derselben Frequenz wie die Antriebswelle (16') zu schwingen.

4. Vorrichtung nach einem der vorhergehenden Ansprüche, wobei die Schneidklinge (18) einen Klingenkörper (182) aufweist, der einen Zwischenabschnitt (183) in länglicher Form und einem distalen Schneidabschnitt (184) umfasst, wobei der distale Schneidabschnitt (184) eine Endschneidkante (184a) bildet, die sich quer zu der Klingenachse (Y) erstreckt.

5. Vorrichtung nach Anspruch 4, wobei sich die Endschneidkante (184a) in einer geradlinigen Richtung erstreckt.

6. Vorrichtung nach dem vorhergehenden Anspruch, wobei der distale Schneidabschnitt (184) durch eine Endschneidkante (184a) begrenzt wird, die orthogonal zu der Klingenachse ist, zwei parallele Kanten (184b), die orthogonal zu der Endkante sind, und zwei geneigte Kanten (184c), die die parallelen Kanten mit dem Zwischenabschnitt (183) verbinden, wobei die zwei geneigten Kanten von dem Zwischenabschnitt (183) auseinanderlaufen.

7. Vorrichtung nach einem der vorhergehenden Ansprüche, wobei die Klingenachse mit der Erstreckung in einer distalen Richtung des Längsachsenkörpers einen Klingenwinkel (β) von 50° bis 70° bildet.

8. Vorrichtung nach einem der vorhergehenden Ansprüche, wobei der Schneidkopf einen Kopfkörper (22) umfasst, der an dem Stützkörper befestigt wird, wobei ein Klingenzapfen (24) in dem Kopfkörper aufgenommen wird und um eine Zapfenachse (Z) drehbar ist, die orthogonal zu der Klingenebene ist, wobei die Schneidklinge vollständig mit dem Klingenzapfen in Drehung versetzt wird, und wobei der Klingenzapfen durch die Bewegungsumwandlungsmittel (20) in Drehung bewegt wird.

9. Vorrichtung nach einem der vorhergehenden Ansprüche, wobei die Bewegungsumwandlungsmittel eine Nockenwelle (30) umfassen, die operativ mit der Antriebswelle verbunden ist, und einen Schwingungshebel (50) mit einem Wellenverbindungsabschnitt (52), der durch die Nocke der Nockenwelle in Eingriff gebracht wird, sodass die Drehung der Nockenwelle eine Schwingung des Schwingungshebels verursacht, sowie einen Klingenverbindungsabschnitt (54), der operativ mit der Schneidklinge verbunden ist.

10. Vorrichtung nach Anspruch 9, wobei die Bewegungsumwandlungsmittel eine Schwingungskugel (56) umfassen, die einen Innenhohlraum (56') definiert, wobei der Innenhohlraum von der Nocke der Nockenwelle (30) in Eingriff gebracht wird, und wobei der Wellenverbindungsabschnitt einen konkaven Abschnitt (52') umfasst, der geometrisch mit der Schwingungskugel (56) gekoppelt ist, sodass die Drehung der Nockenwelle eine Schwingung der Schwingungskugel und damit des Schwingungshebels verursacht.

11. Verfahren zum Schneiden der Rinde eines Hartkäselaibs (2),
umfassend eine Seitenfläche und gegenüberliegende flache Stirnflächen,
wobei das Verfahren den Einsatz einer Schneidklinge (18) umfasst, die mit hoher Frequenz in einer Klingenebene schwingt, die parallel zu den flachen Flächen des Käselaibs ist, wobei die Schneidklinge um eine Schwingachse schwingt, die senkrecht zu der Klingenebene ist, und wobei die Schneidklinge eine Endschneidkante (184a) aufweist,
die, wenn die
Schneidklinge in der Nähe des Käselaibs gebracht wird, sich im Wesentlichen entlang einer geneigten Richtung in Bezug auf die Tangente an die Seitenfläche des Laibs an dem Kontaktpunkt mit der Schneidklinge erstreckt.

## Revendications

1. Un dispositif pour tailler la croûte des fromages à pâte dure, comprenant :
- un corps de support (10) s'étendant principalement selon un axe longitudinal de corps (X) ;
- une tête de taillage (12) montée à une extrémité distale du corps de support (10), dans laquelle la tête de taillage (12) comprend une lame de taillage (18) s'étendant principalement dans un plan de lame et selon un axe de lame (Y),
**caractérisé en ce que** le dispositif comprend
- un groupe d'actionnement (14) comprenant un moteur électrique (16) avec un arbre d'entraînement (16') orienté parallèlement à l'axe longitudinal de corps (X),
**en ce que**
l'axe de lame (Y) étant incliné par rapport à l'axe longitudinal de corps (X),
et **en ce que**
le groupe d'actionnement comprend des moyens de conversion de mouvement (20) coopérant avec la tête de taillage et configurés pour convertir le mouvement rotatif de l'arbre d'entraînement en un mouvement oscillant de la lame de taillage dans le plan de lame.

2. Un dispositif selon la revendication 1, dans lequel le moteur électrique (16) est apte à faire tourner l'arbre d'entraînement à une vitesse d'au moins 10 000 tr/min.

3. Un dispositif selon la revendication 1 ou 2, dans lequel la lame de taillage (18) est amenée à osciller à la même fréquence que l'arbre d'entraînement (16').

4. Un dispositif selon l'une quelconque des revendications précédentes, dans lequel la lame de taillage (18) présente un corps de lame (182) comprenant une portion intermédiaire (183) de forme allongée et une portion de taillage distale (184), la portion de taillage distale (184) formant un bord terminal de taillage (184a) s'étendant transversalement à l'axe de lame (Y).

5. Un dispositif selon la revendication 4, dans lequel le bord terminal de taillage (184a) s'étend selon une direction rectiligne.

6. Un dispositif selon la revendication précédente, dans lequel la portion de taillage distale (184) est délimitée par un bord terminal de taillage (184a) orthogonal à l'axe de lame, deux bords parallèles (184b) orthogonaux au bord terminal et deux bords inclinés (184c) reliant les bords parallèles à la portion intermédiaire (183), les deux bords inclinés divergeant de la portion intermédiaire (183).

7. Un dispositif selon l'une quelconque des revendications précédentes, dans lequel l'axe de lame forme, avec l'extension dans une direction distale de l'axe longitudinal de corps, un angle de lame (β) de 50° à 70°.

8. Un dispositif selon l'une quelconque des revendications précédentes, dans lequel la tête de taillage comprend un corps de tête (22) fixé au corps de support, une broche de lame (24) étant logée dans le corps de tête, tournant autour d'un axe de broche (Z) orthogonal au plan de lame, la lame de taillage étant solidaire en rotation avec la broche de lame, la broche de lame étant mise en rotation par les moyens de conversion de mouvement (20).

9. Un dispositif selon l'une quelconque des revendications précédentes, dans lequel les moyens de conversion de mouvement comprennent un arbre à cames (30) relié opérationnellement à l'arbre d'entraînement et un levier oscillant (50) présentant une portion de connexion à l'arbre (52) engagée par la came de l'arbre à cames, de sorte que la rotation de l'arbre à cames provoque une oscillation du levier oscillant, et une portion de connexion à la lame (54) reliée opérationnellement à la lame de taillage.

10. Un dispositif selon la revendication 9, dans lequel les moyens de conversion de mouvement comprennent une bille d'oscillation (56) définissant une cavité interne (56'), la cavité interne étant engagée par la came de l'arbre à cames (30), et dans lequel la portion de connexion à l'arbre comprend une portion concave (52') couplée géométriquement à la bille d'oscillation (56) de sorte que la rotation de l'arbre à cames provoque une oscillation de la bille d'oscillation et donc du levier d'oscillation.

11. Un procédé pour tailler la croûte d'une meule de fromage à croûte dure (2) comprend une surface latérale et des faces planes opposées,
ledit procédé comprenant l'utilisation d'une lame de taillage (18) oscillant à haute fréquence dans un plan de lame parallèle aux faces planes de la meule de fromage, dans lequel la lame de taillage oscille autour d'un axe d'oscillation perpendiculaire au plan de lame et dans lequel la lame de taillage présente un bord terminal de taillage (184a) qui, lorsque la lame de taillage est rapprochée de la meule de fromage, s'étend sensiblement selon une direction inclinée par rapport à la tangente à la surface latérale de la meule au point de contact avec la lame de taillage.
